# EUROPEAN PATENT SPECIFICATION

(11) **EP 3 955 230 B1**
(45) Date of publication and mention of the grant of the patent: **27.09.2023**
(21) Application number: 21205554.5
(22) Date of filing: 29.10.2021
(51) Int. Cl.: G08G 1/01, G08G 1/04, G08G 1/09, G08G 1/0967

(54) **VEHICLE CONTROL METHOD, VEHICLE-ROAD COORDINATION SYSTEM, ROADSIDE DEVICE AND AUTOMATIC DRIVING VEHICLE**
VERFAHREN ZUR STEUERUNG EINES FAHRZEUGS, SYSTEM ZUR KOORDINIERUNG VON FAHRZEUG UND STRASSE, STRASSENSEITIGE VORRICHTUNG UND AUTOMATISCH FAHRENDES FAHRZEUG
PROCÉDÉ DE COMMANDE DE VÉHICULE, SYSTÈME DE COORDINATION VÉHICULE-ROUTE, DISPOSITIF ROUTIER ET VÉHICULE À CONDUITE AUTOMATIQUE

(30) Priority: 25.12.2020 CN 202011566786
(43) Date of publication of application: 16.02.2022
(73) Proprietor: Apollo Intelligent Connectivity (Beijing) Technology Co., Ltd., Beijing (CN)
(72) Inventor: ZHANG, Zhuhua, Beijing (CN)
(74) Representative: J A Kemp LLP

(56) References cited:
- EP-A1- 3 618 026
- US-A1- 2019 236 950

## Description

### TECHNICAL FIELD

The present application relates to the technology field of computer and, in particular, to a vehicle control method, a vehicle-road coordination system, a roadside device and an automatic driving vehicle, and can be specifically used in the technology field of artificial intelligence, the technology field of automatic driving, the technology field of intelligent transportation, and the technology field of computer vision.

### BACKGROUND

By means of detection devices such as a camera, a lidar and a millimeter wave radar deployed on an automatic driving vehicle, and through perceiving the surrounding environment of the vehicle by the deployed detection devices, the automatic driving vehicle is controlled to travel based on perceived surrounding environment information.

When the surrounding environment of the vehicle is perceived by the deployed detection devices, since heights and perception distances of the detection devices are limited, when there is perception obstruction for the detection devices, there will be potential safety hazards. Therefore, in order to improve the traveling safety of an automatic driving vehicle, after detecting road perception information, a roadside device will send the detected road perception information to the automatic driving vehicles in its communication area by means of broadcasting, so that the automatic driving vehicle can control the automatic driving vehicle to travel in combination with its detected road perception information.

Based on this, how to combine the road perception information of the roadside device to control the traveling of the automatic driving vehicle, so as to improve the traveling safety of the vehicle, is a problem urgent for those skilled in the art to solve.

EP3618026A1 provides a roadside sensing system based on vehicle infrastructure cooperation and a method for controlling a vehicle thereof. The system includes a target vehicle and an intelligent roadside device provided on a road segment divided by a preset distance. The intelligent roadside device comprises a roadside sensing module, a roadside processing module, and a roadside communication module. The roadside sensing module comprises a sensor configured to acquire surrounding environment information of the target vehicle. The roadside processing module is configured to perform fusion processing on the surrounding environment information acquired to form road environment information. The roadside communication module is configured to send the road environment information to the target vehicle. The target vehicle comprises a driving behavior decision module, which is configured to perform path planning according to the road environment information, and to perform autonomous driving according to a result of the path planning.

US2019236950A1 describes an autonomous driving assistance system, a roadside assistance system and a vehicle-mounted assistance system. The autonomous driving assistance system may include at least one roadside sensor, a roadside device, a roadside Vehicle to Everything (V2X) communication device and a vehicle-mounted V2X communication device. The at least one roadside sensor may be configured to collect environment information of a surrounding environment and transmit the environment information to the roadside device. The roadside device may be configured to process the received environment information to obtain perception information and transmit the perception information to the roadside V2X communication device. The roadside V2X communication device may be configured to transmit the received perception information to the vehicle-mounted V2X communication device. The vehicle-mounted V2X communication device may be configured to transmit the received perception information to a vehicle-mounted autonomous driving system.

### SUMMARY

The present application is set out in the appended set of claims. The present application provides a vehicle control method, a vehicle-road coordination system, a roadside device and an automatic driving vehicle, which can accurately control the automatic driving vehicle to travel in combination with road perception information of the roadside device, thereby improving the traveling safety of the vehicle.

According to a first aspect of the present application, a vehicle control method is provided, according to claim 1.

According to another aspect of the present application, a vehicle control method is provided, according to claim 6.

According to another aspect of the present application, a roadside device is provided, according to claim 11.

According to another aspect of the present application, an automatic driving vehicle is provided, according to claim 12.

According to an aspect of the present application, an electronic device is according to claim 13.

According to an aspect of the present application, a non-transitory computer-readable storage medium stored with computer instructions is provided, according to claim 14.

According to an aspect of the present application, a computer program product is provided, including a computer program, where the computer program, when executed by a processor, according to claim 15.

According to the technical solutions of the present application, when a vehicle is controlled to travel, road perception information acquired in a coverage area of a roadside device is firstly filtered to obtain the filtered target road perception information, and effective area information of an area to which the target road perception information belongs is determined; and then the target road perception information obtained by filtering, the effective area information and area information of the coverage area of the roadside device are sent to the vehicle together, so that the vehicle can accurately control the vehicle to travel in combination with the target road perception information, the effective area information and the area information sent by the roadside device, thereby solving the problem that the vehicle takes the road perception information sent by the roadside device as perception information in the entire coverage area of the roadside device by default, thus improving the traveling safety of the vehicle; in addition, since the target road perception information that has an effective reference value on the traveling of the vehicle is sent to the vehicle in a targeted manner, thereby avoiding sending ineffective perception information to the vehicle and reducing a transmission amount of data.

It should be understood that the content described in this section is not intended to identify key or important features of the embodiments of the present disclosure, nor is it intended to limit the scope of the present application. Other features of the present application will be easily understood through the following description. The scope of protection is defined by the appended claims.

### BRIEF DESCRIPTION OF DRAWINGS

The drawings are used to better understand the solutions, and do not constitute a limitation to the present application, where:
FIG. 1 is a systematic schematic diagram of intelligent traffic vehicle-road coordination provided by an embodiment of the present application;
FIG. 2 is a schematic diagram of an intelligent transportation vehicle-road coordination scenario provided by an embodiment of the present application;
FIG. 3 is a schematic diagram of another intelligent transportation vehicle-road coordination scenario provided by an embodiment of the present application;
FIG. 4 is a schematic diagram of another intelligent transportation vehicle-road coordination scenario provided by an embodiment of the present application;
FIG. 5 is a schematic diagram of an intelligent transportation vehicle-road coordination scenario provided by an embodiment of the present application;
FIG. 6 is a schematic flow chart of a vehicle control method provided by a first embodiment of the present application;
FIG. 7 is a schematic diagram of a vehicle traveling area provided by a second embodiment of the present application;
FIG. 8 is a schematic diagram of azimuth information of a coverage area of a roadside device provided by the second embodiment of the present application;
FIG. 9 is a structural schematic diagram of a roadside device provided by a third embodiment of the present application;
FIG. 10 is a structural schematic diagram of an automatic driving vehicle provided by a fourth embodiment of the present application; and
FIG. 11 is a schematic block diagram of an electronic device provided by an embodiment of the present application.

### DESCRIPTION OF EMBODIMENTS

Exemplary embodiments of the present application are described below with reference to the accompanying drawings, where various details of the embodiments of the present application are included to facilitate understanding, and should be considered as merely exemplary. Therefore, those of ordinary skill in the art should recognize that various changes and modifications can be made to the embodiments described herein without departing from the scope and spirit of the present application. Similarly, for clarity and conciseness, descriptions of well-known functions and structures are omitted in the following description.

In the embodiments of the present application, "at least one" refers to one or more, and "multiple" refers to two or more. "And/or", when describing an association relationship of associated objects, means that there can be three kinds of relationships, for example, A and/or B, can mean: such three kinds of situations that A exists alone, A and B exist at the same time, and B exists alone, where A and B can be singular or plural. In the text description of the present application, the character "/" generally indicates that the associated objects before and after are in an "or" relationship.

A vehicle control method provided by the embodiments of the present application can be applied to the field of automatic driving technology. As a landing scenario of artificial intelligence, automatic driving has become the latest development direction of the entire automobile industry. The application of automatic driving technology can comprehensively improve the safety and comfort of automobile driving, and meet higher-level market demands, etc.

The automatic driving technology is: by means of detection devices such as a camera, a lidar and a millimeter wave radar deployed on an automatic driving vehicle, and through perceiving the surrounding environment of the vehicle by the deployed detection devices, the automatic driving vehicle is controlled to travel based on perceived surrounding environment information.

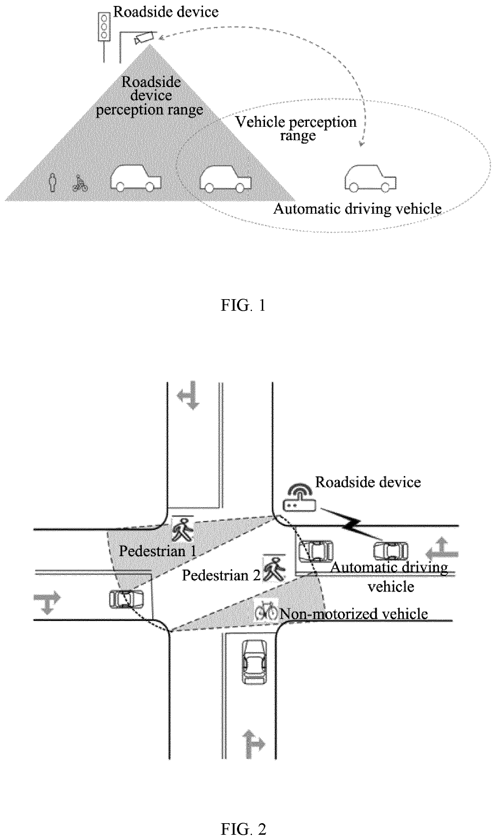

However, since heights and perception ranges of the detection devices are limited, and when there is perception obstruction for the detection devices, there will be potential safety hazards. Therefore, in order to improve the traveling safety of an autonomous vehicle, traveling of a vehicle can be assisted by a roadside device. Exemplarily, please refer to FIG. 1. FIG. 1 is a systematic schematic diagram of intelligent transportation vehicle-road coordination provided by an embodiment of the present application. A roadside device detects road perception information in its coverage area, and sends the detected road perception information to an automatic driving vehicle, so that the automatic driving vehicle controls the automatic driving vehicle to travel in combination with the road perception information.

In combination with FIG. 1, in the embodiments of the present application, the roadside device may be various types of roadside devices. In a systematic architecture of intelligent transportation vehicle-road coordination, a roadside device arranged on the road, a server device (not shown) connected to the roadside device, and at least one automatic driving vehicle connected to the server device are included, where the roadside device includes a roadside perceiving device and a roadside computing device, the roadside perceiving device (for example a roadside camera for collecting images) is connected to the roadside computing device (for example a roadside computing unit (RSCU)), the roadside computing device is connected to the server device, the server device can communicate with an automatic driving or assisted driving vehicle in various ways based on a result computed by the roadside computing device; in another systematic architecture, a roadside perceiving device itself has a computing function, then the roadside perceiving device is directly connected to the server device, where the server device can communicate with the automatic driving or assisted driving vehicle in various ways based on a result computed by the roadside perceiving device. The above connection can be wired or wireless; the server device in the present application is, for example, a cloud control platform, a vehicle-road coordination management platform, a central subsystem, an edge computing platform, a cloud computing platform, etc.

In combination with the above-described description, when the roadside device sends road perception information detected in its coverage area to an automatic driving vehicle to assist the automatic driving vehicle to travel, how the automatic driving vehicle controls the automatic driving vehicle to travel in combination with the road perception information of the roadside device, so as to improve the traveling safety of the vehicle, is a problem urgent for those skilled in the art to solve.

Under normal conditions, after receiving road perception information detected in a coverage area sent by a roadside device, an automatic driving vehicle will take the received road perception information as the road perception information in the entire coverage area of the roadside device by default, and will fuse the received road perception information and perception information of the vehicle per se, and then control the automatic driving vehicle to travel according to the fused perception data. For example, when it is determined that there is an abnormal situation in a front area according to the fused perception data, such as a collapse or an obstacle, the automatic driving vehicle will be controlled to perform a series of safety actions, such as changing from travelling at a constant speed to reducing the speed actively and comfortably, and then changing from reducing the speed actively and comfortably to traveling at a low and constant speed, and then changing from traveling at a low and constant speed to braking at a low speed, and then changing from braking at a low speed to detouring actively at a low speed etc., to pass the abnormal area.

However, in the actual application process, as for a roadside device, a certain sensor may fail or there may be other reasons, causing the roadside device to be unable to perceive the entire coverage area, that is, there is an area that cannot be perceived in the entire coverage area, where this area can be recorded as a perception faulty area. In this case, the roadside device can only perceive some normal areas, which is recorded as road perception information in an effective perception area, and a road perception message in the effective perception area is sent to an automatic driving vehicle. However, after receiving the road perception information sent by the roadside device, the automatic driving vehicle still take the road perception information sent by the roadside device as the perception information in the entire coverage area of the roadside device by default. If there is an obstacle in the perception faulty area and there is no obstacle in the effective perception area, the automatic driving vehicle will determine that there is no obstacle in the entire coverage area of the roadside device by default, thereby causing the traveling safety of the automatic driving vehicle to be relatively lower when the automatic driving vehicle is controlled to travel in combination with the road perception information sent by the roadside device.

For example, with reference to FIG. 2 which is a schematic diagram of an intelligent transportation vehicle-road coordination scenario provided by an embodiment of the present application, it is assumed that a coverage area of a roadside device at a crossroad includes a triangular area where a pedestrian 1 is located, a quadrangular area where a pedestrian 2 is located and a triangular area where a non-motorized vehicle is located, but since a certain sensor in the roadside device fails, thus causing that only the triangular area where the pedestrian 1 is located and the triangular area where the non-motorized vehicle is located can be perceived, while the quadrangular area where the pedestrian 2 is located cannot be perceived, a road perception message in the effective perception area is sent to an automatic driving vehicle. However, the roadside device can only send the perceived road perception information in the triangular area where the pedestrian 1 is located and the triangular area where the non-motorized vehicle is located to the automatic driving vehicle, but the automatic driving vehicle will still take the road perception information sent by the roadside device as the perception information in the entire coverage area of the roadside device by default, and will ignore the pedestrian 2 in the perception faulty area, but when the automatic driving vehicle perceives that there is the pedestrian 2 in the perception faulty area through its own perception information, a passive speed reduction and an emergency braking is needed, and if the emergency braking is not in time, the automatic driving vehicle will collide with the pedestrian 2, thereby causing the occurrence of an accident.

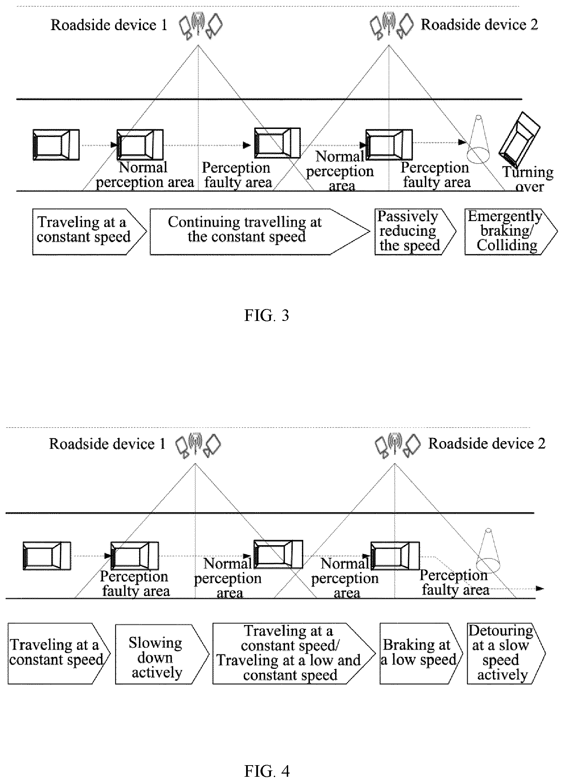

For another example, with reference to FIG. 3 which is a schematic diagram of another intelligent transportation vehicle-road coordination scenario provided by an embodiment of the present application. It is assumed that both a roadside device 1 and a roadside device 2 have a part of areas that are perception faulty areas, and perception information of a normal perception area that a respective roadside device can perceive indicates that there is no obstacle in this normal perception area. Assuming that the automatic driving vehicle is currently traveling at a constant speed, when it is about to enter the normal perception area of the roadside device 1, since the perception information of the roadside device 1 indicates that there is no obstacle in the normal perception area, the automatic driving vehicle continues travelling at the constant speed; when it is about to enter the perception faulty area of the roadside device 1, the automatic driving vehicle will determine, according to the perception information of the roadside device 1, that there is no obstacle in the perception faulty area either by default, and then continue travelling at the constant speed; when it is about to enter the normal perception area of the roadside device 2, since the perception information of the roadside device 2 indicates that there is no obstacle in the normal perception area, the automatic driving vehicle continues travelling at the constant speed; when entering the perception faulty area of the roadside device 2, the automatic vehicle will determine, according to the perception information of the roadside device 2, that there is no obstacle either in the perception faulty area by default, and then continue travelling at the constant speed; but when it perceives that there is an obstacle in the perception faulty area through its own perception information, a passive speed reduction and emergency braking is needed, and if the emergency braking is not in time, the automatic driving vehicle will collide with the obstacle, thereby causing the occurrence of an accident.

In order to solve the problem that the automatic driving vehicle takes the road perception information sent by the roadside device as the perception information in the entire coverage area of the roadside device by default, so as to improve the traveling safety of the automatic driving vehicle, when sending the road perception information to the automatic driving vehicle, the roadside device can also send effective area information of an area to which the road perception information belongs to the automatic driving vehicle at the same time. As can be shown in conjunction with the above-described FIG. 2, when sending road perception information to the automatic driving vehicle, the roadside device can send area information of the triangular area where the pedestrian 1 is located and the triangular area where the non-motorized vehicle is located together to the automatic driving vehicle, so that after receiving the effective area information, the automatic driving vehicle controls the automatic driving vehicle to travel in the triangular area where the pedestrian 1 is located according to the road perception information of the triangular area where the pedestrian 1 is located and the automatic driving vehicle's own perception information; controls the automatic driving vehicle to travel in the triangular area where the non-motorized vehicle is located according to the road perception information of the triangular area where the non-motorized vehicle is located and the automatic vehicle's own perception information; and when about to enter the quadrangular area where the pedestrian 2 is located, slows down actively and comfortably in advance, and controls the automatic driving vehicle to travel in the quadrangular area where the pedestrian 2 is located only according to the automatic driving vehicle's own perception information, thus solving the problem that the automatic driving vehicle takes the road perception information sent by the roadside device as the perception information in the entire coverage area of the roadside device by default, thereby improving the traveling safety of the automatic driving vehicle.

As shown in conjunction with FIG. 4, FIG. 4 is a schematic diagram of another intelligent transportation vehicle-road coordination scenario provided by an embodiment of the present application. It is assumed that both a roadside device 1 and a roadside device 2 have a part of areas that are perception faulty areas, and perception information of a normal perception area that the respective roadside device can perceive indicates that there is no obstacle in this normal perception area. Assuming that the automatic driving vehicle is currently traveling at a constant speed, when about to enter the perception faulty area of the roadside device 1, since at the same time when sending the road perception information of the normal perception area to the automatic driving vehicle, the roadside device 1 sends the effective area information of the normal perception area together to the automatic driving vehicle, when the automatic driving vehicle is about to enter the perception faulty area of the roadside device 1, since the perception information of the perception faulty area is not acquired, the automatic driving vehicle will slow down actively and comfortably in advance; when the automatic driving vehicle is about to enter the normal perception area of the roadside device 1, the automatic driving vehicle will continue travelling at a constant speed; when the automatic driving vehicle is about to enter the normal perception area of the roadside device 2, since the perception information of the roadside device 2 indicates that there is no obstacle in the normal perception area, the automatic driving vehicle will maintain the traveling at a low and constant speed; when the automatic driving vehicle enters the perception faulty area of the roadside device 2, since at the same time when sending the road perception information of the normal perception area to the automatic driving vehicle, the roadside device 2 also sends the effective area information of the normal perception area to the automatic driving vehicle, when the automatic driving vehicle is about to enter the perception faulty area of the roadside device 2, since the perception information of the perception faulty area is not acquired, the automatic driving vehicle will slow down actively and comfortably in advance, and bypass the obstacle actively at a low speed, thus solving the problem that the automatic driving vehicle takes the road perception information sent by the roadside device as the perception information in the entire coverage area of the roadside device by default, thereby improving the traveling safety of the automatic driving vehicle.

Exemplarily, a description mode of the area information can refer to the shape of the area. For example, when the area is a circular area, the area can be described by means of a center and a radius, or the area can be described by means of a center and a diameter; when the area is a polygonal area, the area can be defined by means of the various vertexes of the polygon, and the vertexes need to be coded in adjacent orders; of course, the area can also be described in combination with a high-precision map, which can be set according to actual needs. Here, for the description mode of the area information, the embodiments of the present application do not make further restrictions.

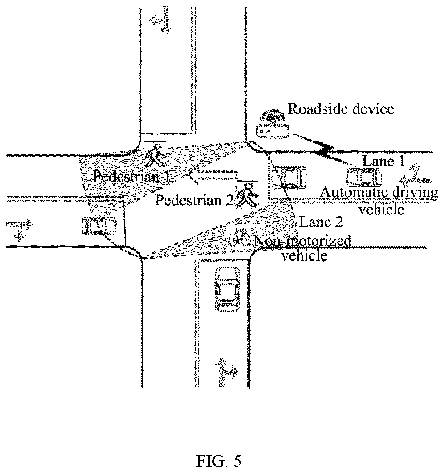

At the same time when sending road perception information to an automatic driving vehicle, the above-described roadside device sends the effective area information of the area to which the road perception information belongs to the automatic driving vehicle, which although can effectively solve the problem that the automatic driving vehicle takes the road perception information sent by the roadside device as the perception information in the entire coverage area of the roadside device by default, however, it can be seen in conjunction with FIG. 5 which is a schematic diagram of an intelligent transportation vehicle-road coordination scenario provided by an embodiment of the present application that, it is assumed that an automatic driving vehicle travels straight in a current lane 1, then for the automatic driving vehicles, since the automatic driving vehicle will not travel in a lane 2, the automatic driving vehicle does not need to acquire the road perception information of the triangular area where the non-motorized vehicle is located and the area information of the triangular area where the non-motorized vehicle is located; instead, it only needs to acquire the road area information of the lane 1 in the traveling direction of the automatic driving vehicle, that is, the roadside device only needs to send perceive information of the triangular area where a pedestrian 1 is located, and the area information of the triangular area where a pedestrian 1 is located to the automatic driving vehicle, so that after receiving the perception information of the triangular area where the pedestrian 1 is located and the area information of the triangular area where the pedestrian 1 is located, the automatic driving vehicle is controlled, according to the road perception information of the triangular area where the pedestrian 1 is located and the automatic driving vehicle's own perception information, to travel in the triangular area where the pedestrian 1 is located, thereby not only solving the problem that the automatic driving vehicle takes the road perception information sent by the roadside device as the perception information in the entire coverage area of the roadside device by default, and improving the traveling safety of the automatic driving vehicle; but also reducing the transmission of ineffective perception information.

Based on the above-described conception, the embodiments of the present application provide a vehicle control method. When the vehicle is controlled to travel, road perception information acquired in a coverage area of a roadside device can be filtered firstly to obtain the filtered target road perception information, and effective area information of an area to which the target road perception information belongs is determined; then a roadside perception message including the target road perception information, the effective area information and area information of the coverage area of the roadside device are sent to the vehicle, so that the vehicle can control the vehicle to travel according to the target road perception information, the effective area information, the area information and vehicle perception information.

It should be noted that when executing technical solutions provided in the embodiments of the present application, operations at a roadside device side can be executed by a roadside device, such as a roadside device with a computing function, or a roadside computing device connected to the roadside device, or they can also be executed by a server device connected to the roadside computing device, or a server device directly connected to the roadside device, etc., which can be set according to actual needs and is not restricted in the embodiments of the present application.

It can be seen that, in an embodiment of the present application, when a vehicle is controlled to travel, road perception information acquired in a coverage area of a roadside device is firstly filtered to obtain the filtered target road perception information, and effective area information of an area to which the target road perception information belongs is determined; then the target road perception information obtained by filtering, the effective area information, and area information of the coverage area of the roadside device are sent to the vehicle together, so that the vehicle can accurately control the vehicle to travel in combination with the target road perception information, the effective area information and the area information sent by the roadside device, thereby solving the problem that the vehicle takes the road perception information sent by the roadside device as the perception information in the entire coverage area of the roadside device by default, thus improving the traveling safety of the vehicle; in addition, since the target road perception information that has an effective reference value on the traveling of the vehicle is sent to the vehicle in a targeted manner, thereby avoiding sending ineffective perception information to the vehicle and reducing a transmission amount of data.

Hereinafter, the vehicle control method provided by the present application will be described in detail through specific embodiments. It can be understood that the following specific embodiments can be combined with each other, and the same or similar concepts or processes may not be repeated in some embodiments.

### Embodiment I

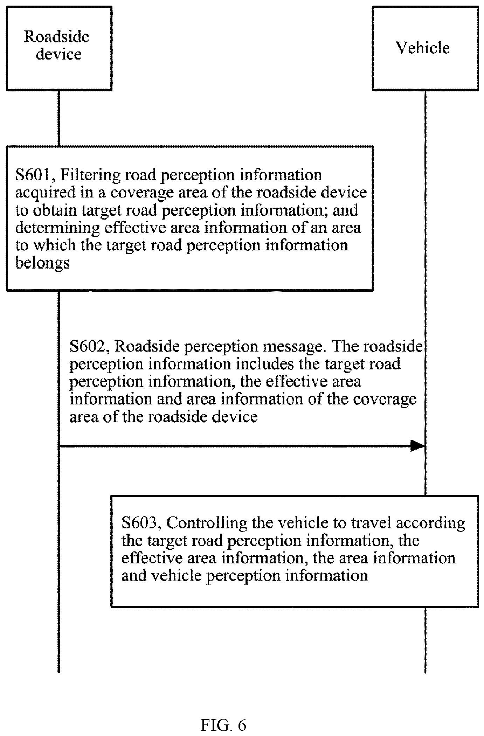

FIG. 6 is a schematic flow chart of a vehicle control method provided by a first embodiment of the present application. The vehicle control method may be executed by a software and/or hardware apparatus. Exemplarily, please refer to FIG. 6, the vehicle control method may include:
S601, a roadside device filters road perception information acquired in a coverage area of the roadside device to obtain target road perception information; and determines effective area information of an area to which the target road perception information belongs.

The road perception information can be the perception information in the entire coverage area of the roadside device, or can also be the perception information of partial areas in the coverage area of the roadside device, which can be specifically set according to actual needs. Here, the embodiment of the present application does not make specific restrictions. It can be understood that, when the road perception information is the perception information in the entire coverage area of the roadside device, in the following step S602, in order to reduce the transmission amount of data, when the roadside device sends a roadside perception message to a vehicle, area information of the coverage area of the roadside device cannot be carried in the roadside perception message; if not considering the reducing of the transmission amount of data, the area information of the coverage area of the roadside device can also be carried in the roadside perception message and sent to the vehicle.

Exemplarily, when the roadside device acquires road perception information in the coverage area of the roadside device, the road perception information can be detected in the coverage area of the roadside device by a camera in the roadside device; the road perception information can also be acquired in the coverage area by other means, which can be specifically set according to actual needs. Here, for the way in which the road perception information in the coverage area of the roadside device is acquired, the embodiment of the present application does not make specific restrictions.

In the embodiments of the present application, after road perception information is acquired in the coverage area of the roadside device, instead of directly sending the road perception information to a vehicle, the road perception information is firstly filtered to obtain the filtered target road perception information, and effective area information of an area to which the target road perception information belongs is determined; and then the target road perception information obtained by filtering by the vehicle, the effective area information and area information of the coverage area of the roadside device are sent to the vehicle together.

The target road perception information can be understood as road perception information that has an effective reference value on the traveling of the vehicle. Exemplarily, a description mode of the effective area information of the area to which the target road perception information belongs can refer to the shape of the area. For example, when the area is a circular area, the area can be described by means of a center and a radius, or the area can be described by means of a center and a diameter; when the area is a polygonal area, the area can be defined by means of the various vertexes of the polygon, and the vertexes need to be coded in adjacent orders; of course, the area can also be described in combination with a high-precision map, which can be specifically set according to actual needs. Here, for the description mode of the effective area information, the embodiments of the present application do not make further restrictions.

In conjunction with FIG. 5, continuing assuming that the coverage area of the roadside device at the crossroad includes a triangular area where a pedestrian 1 is located, a quadrangular area where a pedestrian 2 is located, and a triangular area where a non-motorized vehicle is located, but since a certain sensor in the roadside device fails, thus causing that only the triangular area where the pedestrian 1 is located and the triangular area where the non-motorized vehicle is located can be perceived, while the quadrangular area where the pedestrian 2 is located cannot be perceived, therefore, road perception information acquired by the roadside device in its coverage area includes the perception information of the triangular area where the pedestrians 1 is located and the perception information of the triangle area where the non-motorized vehicle is located. After acquiring the road perception information in its coverage area which includes the perception information of the triangular area where the pedestrian 1 is located and the perception information of the triangular area where the non-motorized vehicle is located, instead of directly sending the perception information of the triangular area where the pedestrian 1 is located and the perception information of the triangular area where the non-motorized vehicle is located to the vehicle, the roadside device firstly filters the perception information of the triangular area where the pedestrian 1 is located and the perception information of the triangular area where the non-motorized vehicle is located, and obtains target road perception information that has an effective reference value on the traveling of the vehicle.

Continuing to refer to FIG. 5, assuming that the vehicle is traveling straight in the current lane 1, for the vehicle, since the vehicle will not travel in the lane 2, the road perception information of the triangular area where the non-motorized vehicle is located is target road perception information that does not have an effective reference value on the traveling of the vehicle and can be regarded as ineffective perception information. Therefore, the roadside device can exclude the perception information of the triangular area where the non-motorized vehicle is located from the acquired perception information, and will send the perception information of the triangular area where the pedestrian 1 is located obtained by filtering as the target road perception information to the vehicle. More specifically, only the perception information of the area which overlaps with the lane 1 and is in the triangle area where the pedestrian 1 is located can be sent to the vehicle as the target road perception information, hence avoiding sending ineffective perception information to the vehicle, thereby reducing the transmission amount of data.

After filtering the road perception information acquired through S601 to obtain the target road perception information, the roadside device may further determine effective area information of an area to which the target road perception information belongs. In order to prevent the vehicle from taking the target road perception information as the road perception information in the entire coverage area of the roadside device by default after receiving the target road perception information, the roadside device can carry the target road perception information, the effective area information and area information of the coverage area of the roadside device in a roadside perception message and send the roadside perception message to the vehicle, that is, execute the following S602:
S602, the roadside device sends a roadside perception message to the vehicle.

The roadside perception message includes the target road perception information, the effective area information and the area information of the coverage area of the roadside device.

S603, the vehicle controls the vehicle to travel according to the target road perception information, the effective area information, the area information and vehicle perception information.

It can be seen that, in the embodiment of the present application, when a vehicle is controlled to travel, road perception information acquired in a coverage area of a roadside device is firstly filtered, the filtered target road perception information is obtained, and effective area information of an area to which the target road perception information belongs is determined; then the target road perception information obtained by filtering, the effective area information and the area information of the coverage area of the roadside device are sent to the vehicle together, so that the vehicle can accurately control the vehicle to travel in combination with the target road perception information, the effective area information and the area information sent by the roadside device, thereby solving the problem that the vehicle takes the road perception information sent by the roadside device as perception information in the entire coverage area of the roadside device by default, thus improving the traveling safety of the vehicle; in addition, since the target road perception information that has an effective reference value on the traveling of the vehicle is sent to the vehicle in a targeted manner, thereby avoiding sending ineffective perception information to the vehicle and reducing a transmission amount of data.

Based on the embodiment shown in the above-described FIG. 6, in order to facilitate the understanding of how the roadside device filters the road perception information to obtain the target road perception information in the above-described S601, in the following, how to filter the road perception information to obtain the target road perception information will be described in detail through the following Embodiment II.

### Embodiment II

In the embodiments of the present application, when the roadside device filters road perception information, the following at least two possible implementations can be included.

In one possible implementation, when filtering road perception information, for each vehicle, the roadside device can predict a traveling area of each vehicle within the coverage area of the roadside device; and determine the road perception information corresponding to the traveling area in the road perception information as the target road perception information. In this way, the road perception information that has an effective reference value on the traveling of the vehicle can be sent to each vehicle in a targeted manner.

Exemplarily, when the roadside device predicts the traveling area of the vehicle within the coverage area of the roadside device, the vehicle may firstly send traveling parameters including a traveling direction and a traveling lane to the roadside device; so that after receiving the traveling parameters sent by the vehicle, the roadside device determines the traveling area where the vehicle is about to travel in the coverage area of the roadside device according to the traveling direction and the traveling lane.

It can be understood that when assisting the roadside device to predict the traveling area of the vehicle in the coverage area of the roadside device, in addition to sending the traveling parameters including the traveling direction and the traveling lane to the roadside device, the vehicle can also send a predicted traveling track to the roadside device, and since the predicted traveling track includes the traveling direction and the traveling lane, therefore, after receiving the predicted traveling track sent by the vehicle, the roadside device can also determine the traveling area where the vehicle is about to travel according to the predicted traveling track; or, a driving behavior and the like can also be sent to the roadside device, so as to assist the roadside device to predict the traveling area of the vehicle in the coverage area of the roadside device, which can be specifically set according to actual needs. Here in the embodiment of the present application, an example is merely illustrated where the vehicle can firstly send the traveling parameters including the traveling direction and the traveling lane to the roadside device, so that the roadside device can determine the traveling area where the vehicle is about to travel according to the traveling direction and the traveling lane, however, it does not mean that the embodiments of the present application are limited thereto.

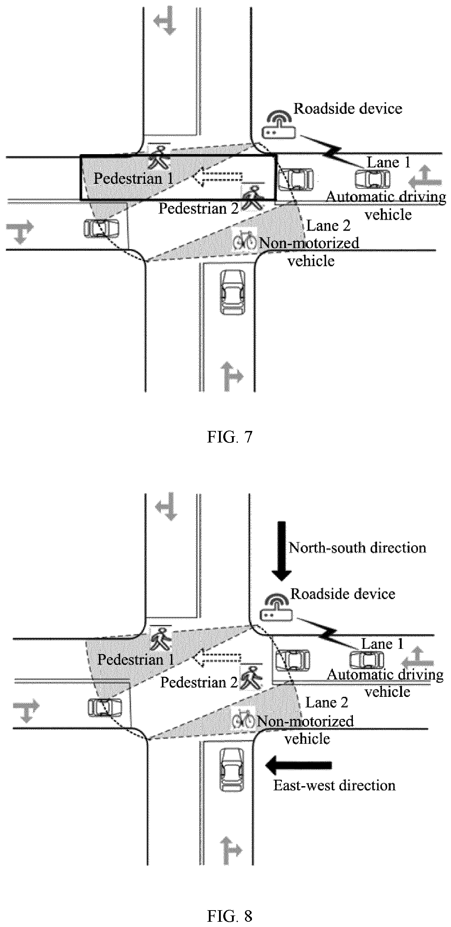

Continuing to combine with FIG. 5, after entering a communication area of the roadside device, the vehicle can actively send to the roadside device its traveling parameters, including the traveling direction of the vehicle: traveling straight, and the traveling lane: a lane 1; after receiving the traveling parameters sent by the vehicle, the roadside device can predict, according to the traveling direction, traveling straight, and the traveling lane 1, the traveling area of the vehicle in the coverage area of the roadside device. As shown in conjunction with FIG. 7 which is a schematic diagram of vehicle traveling area provided by Embodiment II of the present application, it can be seen that the traveling area of the vehicle in the coverage area of the roadside device is a rectangular area in front in the vehicle traveling direction; after the rectangular traveling area of the vehicle in the coverage area of the roadside device is determined, the road perception information corresponding to the rectangular traveling area can be determined, in its acquired road perception information including the perception information of the triangular area where the pedestrian 1 is located and the perception information of the triangular area where the non-motorized vehicle is located, and this part of the road perception information which corresponds to the rectangular traveling area is filtered out and used as the target road perception information to be finally sent to the vehicle. As shown in conjunction with FIG. 7, it is possible that only the perception information of the area which overlaps with the lane 1 and is in the triangular area where the pedestrian 1 is located is sent to the vehicle as the target road perception information, thus avoiding sending ineffective perception information to the vehicle, thereby reducing the transmission mount of data.

It can be seen that in this possible implementation, when the roadside device predicts the traveling area of the vehicle in the coverage area of the roadside device, the vehicle can firstly send the traveling parameters including the traveling direction and the traveling lane to the roadside device; so that the roadside device can determine the traveling area of the vehicle in the coverage area of the roadside device according to the traveling direction and the traveling lane; and determine the road perception information corresponding to the traveling area in the road perception information as the target road perception information, so as to obtain the target road perception information that has an effective reference value on the traveling of the vehicle by filtering. In this way, the target road perception information that has an effective reference value on the traveling of the vehicle can be sent to the vehicle in a targeted manner, thus avoiding sending ineffective perception information to the vehicle, thereby reducing the transmission amount of data.

In another possible implementation, it is different from the above-described possible implementation that, when the roadside device filters the road perception information, the roadside device may not need to receive the traveling parameters of the vehicle from the vehicle, instead, the roadside device classify the road perception information according to azimuth information of the coverage area of the roadside device, to obtain the target road perception information of each of azimuths.

The azimuth information can include an east-west direction or a north-south direction, etc., which can be set according to actual needs.

In conjunction with FIG. 8 which is a schematic diagram of the azimuth information of the coverage area of the roadside device provided in Embodiment II of the present application, after acquiring the road perception information including the perception information of the triangular area where the pedestrian 1 is located and the perception information of the triangular area where the non-motorized vehicle is located, the roadside device can classify the acquired road perception information according to the azimuth information of the coverage area of the roadside device. As shown in conjunction with FIG. 8, the road perception information in the north-south direction and the road perception information in the east-west direction can be respectively determined in the road perception information, where the road perception information in the north-south direction can be used as the target road perception information of a vehicle traveling in the north-south direction, and the road perception information in the east-west direction can be used as the target road perception information of a vehicle traveling in the east-west direction, thereby realizing filtering of the road perception information, and obtaining the target road perception information.

In this possible implementation, after respectively determining the road perception information in the north-south direction and the road perception information in the east-west direction in the road perception information, the roadside device can play the road perception information in the north-south direction and the road perception information in the east-west direction by polling by means of broadcasting; accordingly, a vehicle can, according to its own traveling direction, receive the target road perception information in this traveling direction in a targeted manner, thereby acquiring the target road perception information that has an effective reference value on the traveling of the vehicle, avoiding receiving ineffective perception information, and reducing the transmission amount of data.

Exemplarily, when playing the road perception information of each of the azimuths by polling by means of broadcasting, the roadside device can play the road perception information of each of the azimuths by polling by means of broadcasting at a preset broadcasting frequency; or the roadside device can firstly acquire traffic flow of each of the azimuths in the coverage area of the roadside device according to the target road perception information of each of the azimuths; and determine a corresponding broadcasting frequency of each of the azimuths according to the traffic flow of each of the azimuths in a targeted manner, where the broadcasting frequency is proportional to the traffic flow, that is, the greater the traffic flow is, the larger the corresponding broadcasting frequency is; and then according to the corresponding broadcasting frequency of each of the azimuths, play the road perception information of each of the azimuths by polling.

It should be noted that when filtering the road perception information, the roadside device can be specifically set according to actual needs. Here, the embodiments of the present application are illustrated only by taking the above-described two possible implementations as examples, however, it is not represented that the embodiments of the present application are limited thereto. It can be understood that when the road perception information is filtered through the above-described two possible implementations, the above-described two possible implementations can be used individually or in combination; when they are used in combination, their implementations are the same as the above way where they are used individually, which is not be repeated here in the embodiments of the present application.

Based on any one of the above-described embodiments, after the roadside device carries the target road perception information, the effective area information, and the area information of the coverage area of the roadside device together in the roadside perception message and sends the roadside perception message to a vehicle, the vehicle can control the vehicle to travel according to the target road perception information, the effective area information, the area information, and vehicle perception information.

Exemplarily, when controlling the vehicle to travel according to the target road perception information, the effective area information, the area information, and the vehicle perception information, the vehicle can firstly determine area information of a blind zone in the coverage area of the roadside device according to the effective area information and the area information; control the vehicle to travel in an effective area according to the target road perception information and the vehicle perception information; and control the vehicle to travel in the blind zone according to the vehicle perception information.

It should be noted that when the vehicle is controlled to travel in the effective area, the above is just illustrated with reference to an example where the vehicle is controlled to travel in the effective area according to the target road perception information and the vehicle perception information. If the target road perception information is sufficient to be used to control the vehicle to travel in the effective area, the vehicle can also be controlled to travel in the effective area only according to the target road perception information, which can be specifically set according to actual needs. Here, the embodiment of the present application does not make further restrictions.

Exemplarily, when the vehicle is controlled to travel in the effective area according to the target road perception information and the vehicle perception information, whether there is an obstacle in the effective area can be firstly determined according to the target road perception information and the vehicle perception information; if there is no obstacle, the vehicle can be controlled to continue traveling at a constant speed; if there is an obstacle, the vehicle is controlled to slow down actively in advance, or the vehicle is controlled to slow down actively in advance, and detour at a low speed.

Continuing to combine with FIG. 5, assuming that the road perception information acquired by the roadside device in its coverage area includes the perception information of the triangular area where the pedestrian 1 is located and the perception information of the triangular area where the non-motorized vehicle is located, and the target road perception information that has an effective reference value on the traveling of the vehicle is obtained by filtering the acquired road perception information. Assuming that the target road perception information that has an effective reference value on the traveling of the vehicle is the perception information of the triangular area where the pedestrian 1 is located, then the target perception information of the triangular area where the pedestrian 1 is located, the effective area information of this triangular area, and the area information of the entire coverage area can be sent to the vehicle together. Exemplarily, the effective area information of this triangular area may be coordinates of the three vertexes of the triangular area, and the area information of the entire coverage area may be coordinates of the vertexes of the entire coverage area.

After receiving the target perception information of the triangular area where the pedestrian 1 is located, the effective area information of this triangular area, and the area information of the entire coverage area, the vehicle can determine the entire coverage area of the roadside device according to the coordinates of the vertexes of the entire coverage area, and determine the triangular area according to the coordinates of the three vertexes of the triangle area, and then determine a perception faulty area in the coverage area of the roadside device according to these two areas, that is, a blind zone, and the blind zone is the quadrangular area where the pedestrian 2 is located; when the vehicle is about to enter the blind zone, since the roadside device has not perceived the perception information of the blind zone, the vehicle will slow down actively in advance, so as to safely pass the blind zone; when the vehicle is about to enter the triangular area where the pedestrian 1 is located, since the perception information of this triangular area perceived by the roadside device is received, therefore, the perception information of this triangular area perceived by the roadside device and the vehicle perception information can be fused; according to the fused data, it can be seen that there is the pedestrian 1 in the triangular area, the vehicle can slow down actively in advance and yield to the pedestrian 1, and pass this triangular area at a low speed after the pedestrian 1 passes; if there are obstacles such as broken branches and the like in this triangular area, the vehicle can slow down actively in advance and brake at a low speed to bypass the obstacles, thereby improving the traveling safety of the vehicle.

### Embodiment III

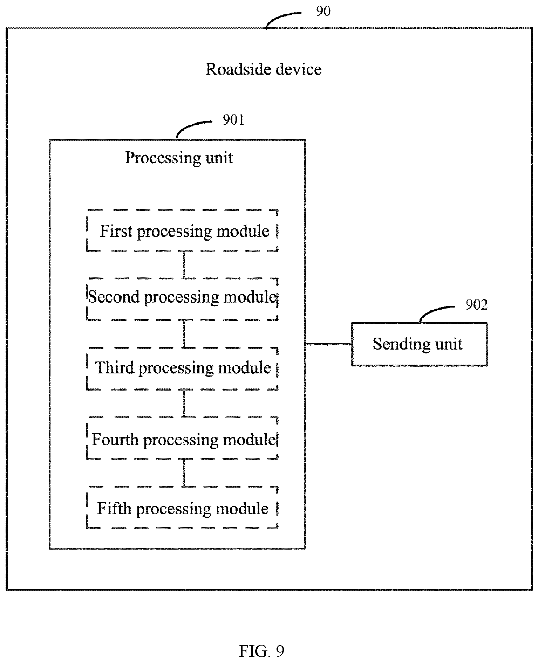

FIG. 9 is a structural schematic diagram of a roadside device 90 provided by a third embodiment of the present application. Exemplarily, please refer to FIG. 9, this roadside device 90 may include:
a processing unit 901, configured to filter road perception information acquired in a coverage area of the roadside device to obtain target road perception information, and determine effective area information of an area to which the target road perception information belongs; and
a sending unit 902, configured to send a roadside perception message to a vehicle, where the roadside perception message includes the target road perception information, the effective area information, and area information of the coverage area of the roadside device, where the roadside perception message is used to indicate that the vehicle is controlled to travel according to the target road perception information, the effective area information and the area information.

Optionally, the processing unit 901 includes a first processing module and a second processing module;
the first processing module is configured to predict a traveling area of the vehicle in the coverage area of the roadside device; and
the second processing module is configured to determine road perception information corresponding to the traveling area in the road perception information as the target road perception information.

Optionally, the first processing module includes a first processing sub-module and a second processing sub-module;
the first processing sub-module is configured to receive traveling parameters sent by the vehicle, where the traveling parameters include a traveling direction and a traveling lane;
the second processing sub-module is configured to determine the traveling area according to the traveling parameters.

Optionally, the processing unit 901 includes a third processing module;
the third processing module is configured to classify the road perception information according to azimuth information of the coverage area of the roadside device to obtain the target road perception information of each of azimuths.

Optionally, the processing unit 901 further includes a fourth processing module and a fifth processing module;
the fourth processing module is configured to acquire traffic flow of each of the azimuths in the coverage area of the roadside device according to the target road perception information of each of the azimuths;
the fifth processing module is configured to determine a broadcasting frequency of the target road perception information of each of the azimuths according to the traffic flow of each of the azimuths, where the broadcasting frequency is proportional to the traffic flow; and
the sending module is specifically configured to send the roadside perception message to the vehicle according to the broadcasting frequency.

The roadside device 90 provided by the embodiment of the present application can execute the technical solutions of the vehicle control method at the roadside device side shown in any one of the above-described embodiments. Its implementation principle and beneficial effects are similar to the implementation principle and beneficial effects of the vehicle control method at the roadside device side, and reference can be made to the implementation principle and beneficial effects of the vehicle control method at the roadside device side, which will not be repeated herein again.

### Embodiment IV

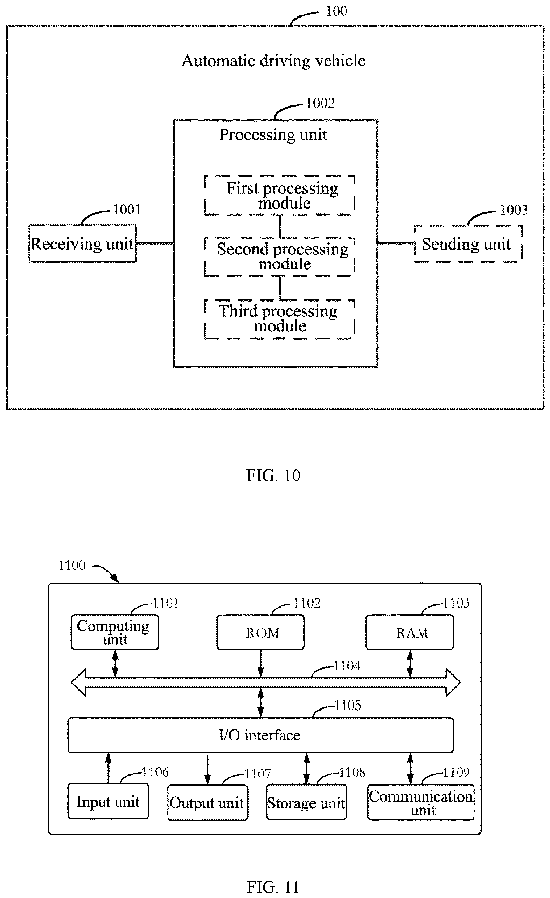

FIG. 10 is a structural schematic diagram of an automatic driving vehicle 100 provided by a fourth embodiment of the present application. Exemplarily, please refer to FIG. 10, the automatic driving vehicle 100 may include:
a receiving unit 1001, configured to receive a roadside perception message sent by a roadside device, where the roadside perception message includes target road perception information, effective area information of an area to which the target road perception information belongs and area information of a coverage area of the roadside device; and
a processing unit 1002, is configured to control the vehicle to travel according to the target road perception information, the effective area information, the area information and vehicle perception information.

Optionally, the processing unit 1002 includes a first processing module, a second processing module and a third processing module;
the first processing module is configured to determine area information of a blind zone in the coverage area of the roadside device according to the effective area information and the area information;
the second processing module is configured to control the vehicle to travel in an effective area according to the target road perception information and the vehicle perception information; and
the third processing module is configured to control the vehicle to travel in the blind zone according to the vehicle perception information.

Optionally, the automatic driving vehicle 100 further includes a sending unit 1003;
the sending unit 1003 is configured to send traveling parameters to the roadside device, where the traveling parameters include a traveling direction and a traveling lane.

Optionally, the receiving unit 1001 is specifically configured to receive, according to a broadcasting frequency, the roadside perception message sent by the roadside device.

Optionally, the second processing module includes a first processing sub-module and a second processing sub-module;
the first processing sub-module is configured to determine whether there is an obstacle in the effective area according to the target road perception information and the vehicle perception information;
the second processing sub-module is configured to: if there is an obstacle, control the vehicle to slow down actively in advance, or control the vehicle to slow down actively in advance, and detour at a low speed.

The automatic driving vehicle 100 provided by the embodiment of the present application can execute technical solutions of the vehicle control method on the vehicle side according to any one of the above-described embodiments. Its implementation principle and beneficial effects are similar to the implementation principle and beneficial effects of the vehicle control method on the vehicle side, and reference can be made to the implementation principle and beneficial effects of the vehicle control method on the vehicle side, which will not be repeated herein again.

An embodiment of the present application further provides a vehicle-road coordination system, which includes the roadside device according to any one of the above-described embodiments and the automatic driving vehicle according to any one of the above-described embodiments, and executes technical solutions of the vehicle control method shown in any one of the above-described embodiments. Its implementation principle and beneficial effects are similar to the implementation principle and beneficial effects of the vehicle control method, and reference can be made to the implementation principle and beneficial effects of the vehicle control method, which will not be repeated herein again.

An embodiment of the present application further provides a computer program product, including a computer program, where the computer program, when executed by a processor, executes technical solutions of the vehicle control method shown in any one of the above-described embodiments. Its implementation principle and beneficial effects are similar to the implementation principle and beneficial effects of the vehicle control method, and reference can be made to the implementation principle and beneficial effects of the vehicle control method, which will not be repeated herein again.

An embodiment of the present application further provides a computer program stored in a readable storage medium, where at least one processor of an electronic device can read the computer program from the readable storage medium, and the at least one processor executes the computer program to enable the electronic device to execute technical solutions of the vehicle control method shown in any one of the above-described embodiments. Its implementation principle and beneficial effects are similar to the implementation principle and beneficial effects of the vehicle control method, and reference can be made to the implementation principle and beneficial effects of the vehicle control method, which will not be repeated herein again.

According to the embodiments of the present application, the present application further provides an electronic device and a readable storage medium.

FIG. 11 is a schematic block diagram of an electronic device 1100 provided by an embodiment of the present application. The electronic device is intended to represent various forms of digital computers, such as a laptop computer, a desktop computer, a workstation, a personal digital assistant, a server, a blade server, a mainframe computer, and other suitable computers. The electronic device can also represent various forms of mobile devices, such as a personal digital processor, a cellular phone, a smart phone, a wearable device and other similar computing apparatus. The components shown herein as well as their connections and relationships and their functions are merely examples, and are not intended to limit the implementation of the present application described and/or claimed herein.

As shown in FIG. 11, the electronic device 1100 includes a computing unit 1101, which can execute various appropriate actions and processing, according to a computer program stored in a read-only medium (ROM) 1102 or a computer program loaded from a storage unit 1108 into a random access memory (RAM) 1103. In the RAM 1103, various programs and data required for the operation of the device 1100 can also be stored. The computing unit 1101, the ROM 1102 and the RAM 1103 are connected to each other through a bus 1104. The input/output (I/O) interface 1105 is also connected to the bus 1104.

Multiple components in the device 1100 are connected to the I/O interface 1105, including: an input unit 1106, such as a keyboard, a mouse, etc.; an output unit 1107, such as various types of displays, speakers, etc.; a storage unit 1108, such as a disk, an optical disk, etc.; and a communication unit 1109, such as a network card, a modem, a wireless communication transceiver, etc. The communication unit 1109 allows the device 1100 to exchange information/data with other devices through a computer network such as the Internet and/or various telecommunication networks.

The computing unit 1101 may be various general-purpose and/or special-purpose processing components with processing and computing capabilities. Some examples of the computing unit 1101 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processors, controllers, microcontrollers, etc. The computing unit 1101 executes the various methods and processing described above, such as a vehicle control method. For example, in some embodiments, the vehicle control method may be implemented as a computer software program, which is tangibly contained in a machine-readable medium, such as the storage unit 1108. In some embodiments, part or all of the computer program may be loaded and/or installed on the device 1100 via the ROM 1102 and/or the communication unit 1109. When the computer program is loaded into the RAM 1103 and executed by the computing unit 1101, one or more steps of the vehicle control method described above can be executed. Alternatively, in other embodiments, the computing unit 1101 may be configured to execute the vehicle control method in any other suitable manner (for example, by means of firmware).

The various embodiments of the systems and techniques described above herein may be implemented in digital electronic circuit systems, integrated circuit systems, field programmable gate arrays (FPGA), application specific integrated circuit (ASIC), dedicated standard products (ASSP), system on chips (SOC), load programmable logic devices (CPLD), computer hardware, firmware, software, and/or combinations thereof. These various implementations may include: being implemented in one or more computer programs that can be executed and/or interpreted on a programmable system including at least one programmable processor. The programmable processor may be a special or general programmable processor, and can receive data and instructions from a storage system, at least one input apparatus and at least one output apparatus, and transmit data and instructions to the storage system, the at least one input apparatus and the at least one output apparatus.

The program codes used to implement the method of the present application can be written in any combination of one or more programming languages. These program codes can be provided to the processors or controllers of general-purpose computers, special-purpose computers, or other programmable data processing devices, so that when the program codes are executed by the processors or controllers, the functions /the operation specified in the flowcharts and/or the block diagrams are implemented. The program codes can be executed entirely on a machine, partly on a machine, as an independent software package, partly executed on a machine and partly executed on a remote machine, or entirely executed on a remote machine or a server.

In the context of the present application, a machine-readable medium may be a tangible medium, which may contain or store a program for the instruction execution system, apparatus, or device to use or to be used in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage medium would include electrical connections based on one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any suitable combination of the above content.

To provide interaction with users, the systems and techniques described herein can be implemented on a computer which has: a display device (e.g., a CRT (cathode ray tube) or LCD (liquid crystal display) monitor) for displaying information to users; as well as a keyboard and a pointing apparatus (e.g., a mouse or a trackball) through which users can provide inputs to the computer. Other kinds of apparatuses can also be used to provide interaction with users, for example, a feedback provided to a user can be any form of sensory feedback (e.g., visual feedback, auditory feedback, or tactile feedback); and can receive inputs from users in any form (including acoustic input, voice input or tactile input).

The systems and techniques described herein can be implemented in a computing system including background components (e.g., as a data server), or a computing system including middleware components (e.g., an application server), or a computing system including front-end components (e.g., a user computer with a graphical user interface or a web browser through which users can interact with implementations of the systems and techniques described herein), or a computing system including any combination of such background components, middleware components or front-end components. Components of the system can be connected to each other through digital data communication in any form or medium (e.g., a communication network). Examples of the communication network include: a local area networks (LAN), a wide area network (WAN) and the Internet.

A computing system may include a client and a server. The client and server are generally remote from each other and usually interact through a communication network. A relationship between the client and the server is generated by computer programs running on corresponding computers and having a client-server relationship with each other. The server can be a cloud server, which is also known as a cloud computing server or a cloud host. It is a host product in the cloud computing service system to solve the defects of huge management difficulty and weak business scalability existing in traditional physical host and VPS service ("Virtual Private Server", or "VPS" for short). The server can also be a server of a distributed system, or a server combined with a blockchain.

It should be understood that steps can be reordered, added or deleted using the various forms of processes shown above. For example, the steps described in the present application can be executed in parallel, sequentially or in a different order, so long as the desired result of the technical solution disclosed in the present application can be achieved, which is not limited herein.

The above specific implementations do not constitute a limitation to the protection scope of the present application. It should be understood by those skilled in the art that various modifications, combinations, sub-combinations, and substitutions may be performed according to design requirements and other factors. The scope of protection is defined by the appended claims.

## Claims

1. A vehicle control method, the method being executed by a roadside device (90) comprising:
filtering (S601) road perception information acquired in a coverage area of the roadside device to obtain target road perception information; and determining effective area information of an area to which the target road perception information belongs; and
sending (S602) a roadside perception message to the vehicle, wherein the roadside perception message comprises the target road perception information, the effective area information and area information of the coverage area of the roadside device, and the roadside perception message is used to indicate that the vehicle is controlled to travel based on the target road perception information, the effective area information and the area information; wherein the effective area information is used to indicate which area, within the area to which the target road perception information belongs, is an effective area, and the effective area refers to an area to which the target road perception information belongs and in which the roadside device is capable of working normally.

2. The method according to claim 1, wherein the filtering (S601) the road perception information acquired in the coverage area of the roadside device to obtain the target road perception information comprises:
predicting a traveling area of the vehicle in the coverage area of the roadside device; and
determining road perception information corresponding to the traveling area in the road perception information as the target road perception information.

3. The method according to claim 2, wherein the predicting the traveling area of the vehicle in the coverage area of the roadside device comprises:
receiving traveling parameters sent by the vehicle, wherein the traveling parameters comprise a traveling direction and a traveling lane; and
determining the traveling area according to the traveling parameters.

4. The method according to any one of claims 1 to 3, wherein the filtering (S601) the road perception information acquired in the coverage area of the roadside device to obtain the target road perception information comprises:
classifying the road perception information according to azimuth information of the average area of the roadside device to obtain the target road perception information of each of azimuths.

5. The method according to claim 4, wherein the sending (S602) the roadside perception message to the vehicle comprises:
acquiring traffic flow of each of the azimuths in the average area of the roadside device according to the target road perception information of each of the azimuths;
determining a broadcasting frequency of the target road perception information of each of the azimuths according to the traffic flow of each of the azimuths, wherein the broadcasting frequency is proportional to the traffic flow; and
sending the roadside perception message to the vehicle according to the broadcasting frequency.

6. An automatic driving vehicle (100) control method, comprising:
receiving a roadside perception message sent from a roadside device, wherein the roadside perception message comprises target road perception information, effective area information of an area to which the target road perception information belongs and area information of a coverage area of the roadside device; wherein the target road perception information is obtained by filtering (S601) road perception information acquired in a coverage area of the roadside device, the effective area information is used to indicate which area, within the area to which the target road perception information belongs, is an effective area, and the effective area refers to an area to which the target road perception information belongs and in which the roadside device is capable of working normally and
controlling (S603) the vehicle to travel according to the target road perception information, the effective area information, the area information and vehicle perception information.

7. The method according to claim 6, wherein the controlling (S603) the vehicle to travel according to the target road perception information, the effective area information, the area information, and the vehicle perception information comprises:
determining area information of a blind zone in the coverage area of the roadside device according to the effective area information and the area information;
controlling the vehicle to travel in an effective area according to the target road perception information and the vehicle perception information; and
controlling the vehicle to travel in the blind zone according to the vehicle perception information.

8. The method according to claim 6 or 7, wherein the method further comprises:
sending traveling parameters to the roadside device, wherein the traveling parameters comprise a traveling direction and a traveling lane.

9. The method according to claim 6 or 7, wherein the receiving the roadside perception message sent by the roadside device comprises:
receiving, according to a broadcasting frequency, the roadside perception message sent by the roadside device.

10. The method according to any one of claims 7 to 9, wherein the controlling the vehicle to travel in the effective area according to the target road perception information and the vehicle perception information comprises:
determine whether there is an obstacle in the effective area according to the target road perception information and the vehicle perception information; and
if there is an obstacle, controlling the vehicle to slow down actively in advance; or controlling the vehicle to slow down actively in advance, and detour at a low speed.

11. A roadside device (90), comprising a plurality of modules configured to implement the vehicle control method according to any one of claims 1 to 5.

12. An automatic driving vehicle (100), comprising a plurality of modules configured to implement the vehicle control method according to any one of claims 6 to 10.

13. An electronic device, comprising:
at least one processor, and
a memory communicatively connected to the at least one processor; wherein
the memory stores instructions executable by the at least one processor, and the instructions are executed by the at least one processor, so that the at least one processor is capable of executing the vehicle control method according to any one of claims 1 to 5; or so that the at least one processor is capable of executing the vehicle control method according to any one of claims 6 to 10.

14. A non-transitory computer-readable storage medium, having computer instructions stored thereon, wherein the computer instructions are used to cause a computer to execute the vehicle control method according to any one of claims 1 to 5; or, to execute the vehicle control method according to any one of claims 6 to 10.

15. A computer program product, comprising a computer program, wherein the computer program, when executed by a processor, executes the vehicle control method according to any one of claims 1 to 5; or, executes the vehicle control method according to any one of claims 6 to 10.

## Patentansprüche

1. Fahrzeugsteuerungsverfahren, wobei das Verfahren durch eine Vorrichtung am Straßenrand (90) ausgeführt wird, umfassend:
Filtern (S601) von Straßenwahrnehmungsinformationen, die in einem Abdeckungsbereich der Vorrichtung am Straßenrand erfasst werden, um Zielstraßenwahrnehmungsinformationen zu erhalten; und Bestimmen von Wirkungsbereichsinformationen eines Bereichs, zu dem die Zielstraßenwahrnehmungsinformationen gehören; und
Senden (S602) einer Straßenrandwahrnehmungsnachricht an das Fahrzeug, wobei die Straßenrandwahrnehmungsnachricht die Zielstraßenwahrnehmungsinformationen, die Wirkungsbereichsinformationen und Bereichsinformationen des Abdeckungsbereichs der Vorrichtung am Straßenrand umfasst und die Straßenrandwahrnehmungsnachricht verwendet wird, um anzuzeigen, dass das Fahrzeug gesteuert wird, um auf der Grundlage der Zielstraßenwahrnehmungsinformationen, der Wirkungsbereichsinformationen und der Bereichsinformationen zu fahren; wobei die Wirkungsbereichsinformationen verwendet werden, um anzuzeigen, welcher Bereich innerhalb des Bereichs, zu dem die Zielstraßenwahrnehmungsinformationen gehören, ein Wirkungsbereich ist, und der Wirkungsbereich sich auf einen Bereich bezieht, zu dem die Zielstraßenwahrnehmungsinformationen gehören und in dem die Vorrichtung am Straßenrand in der Lage ist, normal zu arbeiten.

2. Verfahren nach Anspruch 1, wobei das Filtern (S601) der im Abdeckungsbereich der Vorrichtung am Straßenrand erfassten Straßenwahrnehmungsinformationen, um die Zielstraßenwahrnehmungsinformationen zu erhalten, Folgendes umfasst:
Vorhersagen eines Fahrbereichs des Fahrzeugs in dem Abdeckungsbereich der Vorrichtung am Straßenrand; und
Bestimmen von Straßenwahrnehmungsinformationen, die dem Fahrbereich in den Straßenwahrnehmungsinformationen entsprechen, als die Zielstraßenwahrnehmungsinformationen.

3. Verfahren nach Anspruch 2, wobei die Vorhersage des Fahrbereichs des Fahrzeugs im Abdeckungsbereich der Vorrichtung am Straßenrand Folgendes umfasst:
Empfangen von Fahrparametern, die von dem Fahrzeug gesendet werden, wobei die Fahrparameter eine Fahrtrichtung und eine Fahrspur umfassen; und
Bestimmen des Fahrbereichs gemäß den Fahrparametern.

4. Verfahren nach einem der Ansprüche 1 bis 3, wobei das Filtern (S601) der im Abdeckungsbereich der Vorrichtung am Straßenrand erfassten Straßenwahrnehmungsinformationen, um die Zielstraßenwahrnehmungsinformationen zu erhalten, Folgendes umfasst:
Klassifizieren der Straßenwahrnehmungsinformationen gemäß Azimutinformationen des durchschnittlichen Bereichs der Vorrichtung am Straßenrand, um die Zielstraßenwahrnehmungsinformationen für jeden Azimut zu erhalten.

5. Verfahren nach Anspruch 4, wobei das Senden (S602) der Straßenrandwahrnehmungsnachricht an das Fahrzeug Folgendes umfasst:
Erfassen des Verkehrsflusses jedes der Azimute in dem durchschnittlichen Bereich der Vorrichtung am Straßenrand gemäß den Zielstraßenwahrnehmungsinformationen jedes der Azimute;
Bestimmen einer Sendefrequenz der Zielstraßenwahrnehmungsinformationen jedes der Azimute gemäß dem Verkehrsfluss jedes der Azimute, wobei die Sendefrequenz proportional zum Verkehrsfluss ist; und
Senden der Straßenrandwahrnehmungsnachricht an das Fahrzeug gemäß der Sendefrequenz.

6. Verfahren zur Steuerung eines automatisch fahrenden Fahrzeugs (100), umfassend:
Empfangen einer von einer Vorrichtung am Straßenrand gesendeten Straßenrandwahrnehmungsnachricht, wobei die Straßenrandwahrnehmungsnachricht Zielstraßenwahrnehmungsinformationen, Wirkungsbereichsinformationen eines Bereichs, zu dem die Zielstraßenwahrnehmungsinformationen gehören, und Bereichsinformationen eines Abdeckungsbereichs der Vorrichtung am Straßenrand umfasst; wobei die Zielstraßenwahrnehmungsinformationen durch Filtern (S601) von Straßenwahrnehmungsinformationen erhalten werden, die in einem Abdeckungsbereich der Vorrichtung am Straßenrand erfasst werden, die Wirkungsbereichsinformationen verwendet werden, um anzuzeigen, welcher Bereich innerhalb des Bereichs, zu dem die Zielstraßenwahrnehmungsinformationen gehören, ein Wirkungsbereich ist, und der Wirkungsbereich sich auf einen Bereich bezieht, zu dem die Zielstraßenwahrnehmungsinformationen gehören und in dem die Vorrichtung am Straßenrand in der Lage ist, normal zu arbeiten, und
Steuern (S603) des Fahrzeugs, sodass es gemäß den Zielstraßenwahrnehmungsinformation, den Wirkungsbereichsinformationen, den Bereichsinformationen und den Fahrzeugwahrnehmungsinformationen fährt.

7. Verfahren nach Anspruch 6, wobei das Steuern (S603) des Fahrzeugs, sodass es gemäß den Zielstraßenwahrnehmungsinformationen, den Wirkungsbereichsinformationen, den Bereichsinformationen und den Fahrzeugwahrnehmungsinformationen fährt, Folgendes umfasst:
Bestimmen von Bereichsinformationen einer Blindzone im Abdeckungsbereich der Vorrichtung am Straßenrand gemäß den Wirkungsbereichsinformationen und den Bereichsinformationen;
Steuern des Fahrzeugs, um in einem Wirkungsbereich zu fahren, gemäß den Zielstraßenwahrnehmungsinformationen und der Fahrzeugwahrnehmungsinformationen; und
Steuern des Fahrzeugs, um in der Blindzone zu fahren, gemäß den Fahrzeugwahrnehmungsinformationen.

8. Verfahren nach Anspruch 6 oder 7, wobei das Verfahren ferner Folgendes umfasst:
Senden von Fahrparametern an die Vorrichtung am Straßenrand, wobei die Fahrparameter eine Fahrtrichtung und eine Fahrspur umfassen.

9. Verfahren nach Anspruch 6 oder 7, wobei der Empfang der von der Vorrichtung am Straßenrand gesendeten Straßenrandwahrnehmungsnachricht Folgendes umfasst:
Empfangen der von der Vorrichtung am Straßenrand gesendeten Straßenrandwahrnehmungsnachricht gemäß einer Sendefrequenz.

10. Verfahren nach einem der Ansprüche 7 bis 9, wobei das Steuern des Fahrzeugs, sodass es im Wirkungsbereich Bereich gemäß den Zielstraßenwahrnehmungsinformationen und den Fahrzeugwahrnehmungsinformationen fährt, Folgendes umfasst:
Bestimmen, ob es ein Hindernis im Wirkungsbereich gibt, gemäß den Zielstraßenwahrnehmungsinformationen und den Fahrzeugwahrnehmungsinformationen; und
wenn es ein Hindernis gibt, Steuern des Fahrzeugs, um im Voraus aktiv abzubremsen; oder Steuern des Fahrzeugs, um im Voraus aktiv abzubremsen und mit einer niedrigen Geschwindigkeit einen Umweg zu fahren.

11. Vorrichtung am Straßenrand (90), die eine Vielzahl von Modulen umfasst, die konfiguriert sind, um das Fahrzeugsteuerungsverfahren nach einem der Ansprüche 1 bis 5 zu implementieren.

12. Automatisch fahrendes Fahrzeug (100), das eine Vielzahl von Modulen umfasst, die konfiguriert sind, um das Fahrzeugsteuerungsverfahren nach einem der Ansprüche 6 bis 10 zu implementieren.

13. Elektronische Vorrichtung, die Folgendes umfasst:
mindestens einen Prozessor, und
einen Speicher, der kommunikativ mit dem mindestens einen Prozessor verbunden ist; wobei
der Speicher Befehle speichert, die von dem mindestens einen Prozessor ausführbar sind, und die Befehle von dem mindestens einen Prozessor ausgeführt werden, sodass der mindestens eine Prozessor in der Lage ist, das Fahrzeugsteuerungsverfahren nach einem der Ansprüche 1 bis 5 auszuführen; oder sodass der mindestens eine Prozessor in der Lage ist, das Fahrzeugsteuerungsverfahren nach einem der Ansprüche 6 bis 10 auszuführen.

14. Nichtflüchtiges, computerlesbares Speichermedium, auf dem Computerbefehle gespeichert sind, wobei die Computerbefehle verwendet werden, um einen Computer zu veranlassen, das Fahrzeugsteuerungsverfahren nach einem der Ansprüche 1 bis 5 auszuführen; oder um das Fahrzeugsteuerungsverfahren nach einem der Ansprüche 6 bis 10 auszuführen.

15. Computerprogrammprodukt, umfassend ein Computerprogramm, wobei das Computerprogramm, wenn es von einem Prozessor ausgeführt wird, das Fahrzeugsteuerungsverfahren nach einem der Ansprüche 1 bis 5 ausführt; oder das Fahrzeugsteuerungsverfahren nach einem der Ansprüche 6 bis 10 ausführt.

## Revendications

1. Procédé de commande de véhicule, le procédé étant exécuté par un dispositif de bord de route (90) comprenant :
le filtrage (S601) d'informations de perception de route acquises dans une zone de couverture du dispositif de bord de route pour obtenir des informations de perception de route cibles ; et la détermination d'informations de zone efficace d'une zone à laquelle appartiennent les informations de perception de route cibles ; et
l'envoi (S602) d'un message de perception de bord de route au véhicule, dans lequel le message de perception de bord de route comprend les informations de perception de route cibles, les informations de zone efficace et des informations de zone de la zone de couverture du dispositif de bord de route, et le message de perception de bord de route est utilisé pour indiquer que le véhicule est commandé pour un déplacement sur la base des informations de perception de route cibles, des informations de zone efficace et des informations de zone ; dans lequel les informations de zone efficace sont utilisées pour indiquer la zone, au sein de la zone à laquelle appartiennent les informations de perception de route cibles, qui est une zone efficace, et la zone efficace fait référence à une zone à laquelle appartiennent les informations de perception de route cibles et dans laquelle le dispositif de bord de route est capable de fonctionner normalement.

2. Procédé selon la revendication 1, dans lequel le filtrage (S601) des informations de perception de route acquises dans la zone de couverture du dispositif de bord de route pour obtenir les informations de perception de route cibles comprend :
la prédiction d'une zone de déplacement du véhicule dans la zone de couverture du dispositif de bord de route ; et
la détermination d'informations de perception de route correspondant à la zone de déplacement dans les informations de perception de route en tant qu'informations de perception de route cibles.

3. Procédé selon la revendication 2, dans lequel la prédiction de la zone de déplacement du véhicule dans la zone de couverture du dispositif de bord de route comprend :
la réception de paramètres de déplacement envoyés par le véhicule, dans lequel les paramètres de déplacement comprennent une direction de déplacement et une voie de déplacement ; et
la détermination de la zone de déplacement selon les paramètres de déplacement.

4. Procédé selon l'une quelconque des revendications 1 à 3, dans lequel le filtrage (S601) des informations de perception de route acquises dans la zone de couverture du dispositif de bord de route pour obtenir les informations de perception de route cibles comprend :
la classification des informations de perception de route selon des informations d'azimut de la zone de couverture du dispositif de bord de route pour obtenir les informations de perception de route cibles de chacun d'azimuts.

5. Procédé selon la revendication 4, dans lequel l'envoi (S602) du message de perception de bord de route au véhicule comprend :
l'acquisition d'un flux de circulation de chacun des azimuts dans la zone de couverture du dispositif de bord de route selon les informations de perception de route cibles de chacun des azimuts ;
la détermination d'une fréquence de radiodiffusion des informations de perception de route cibles de chacun des azimuts selon le flux de circulation de chacun des azimuts, dans lequel la fréquence de radiodiffusion est proportionnelle au flux de circulation ; et
l'envoi du message de perception de bord de route au véhicule selon la fréquence de radiodiffusion.

6. Procédé de commande de véhicule à conduite automatique (100), comprenant :
la réception d'un message de perception de bord de route envoyé depuis un dispositif de bord de route, dans lequel le message de perception de bord de route comprend des informations de perception de route cibles, des informations de zone efficace d'une zone à laquelle appartiennent les informations de perception de route cibles et des informations de zone d'une zone de couverture du dispositif de bord de route, dans lequel les informations de perception de route cibles sont obtenues par filtrage (S601) d'informations de perception de route acquises dans une zone de couverture du dispositif de bord de route, les informations de zone efficace sont utilisées pour indiquer la zone, au sein de la zone à laquelle appartiennent les informations de perception de route cibles, qui est une zone efficace, et la zone efficace fait référence à une zone à laquelle appartiennent les informations de perception de route cibles et dans laquelle le dispositif de bord de route est capable de fonctionner normalement et
la commande (S603) du véhicule pour un déplacement selon les informations de perception de route cibles, les informations de zone efficace, les informations de zone et des informations de perception de véhicule.

7. Procédé selon la revendication 6, dans lequel la commande (S603) du véhicule pour un déplacement selon les informations de perception de route cibles, les informations de zone efficace, les informations de zone, et les informations de perception de véhicule comprend :
la détermination d'informations de zone d'un angle mort de couverture de la zone de couverture du dispositif de bord de route selon les informations de zone efficace et les informations de zone ;
la commande du véhicule pour un déplacement dans une zone efficace selon les informations de perception de route cibles et les informations de perception de véhicule ; et
la commande du véhicule pour un déplacement dans l'angle mort de couverture selon les informations de perception de véhicule.

8. Procédé selon la revendication 6 ou 7, dans lequel le procédé comprend en outre :
l'envoi de paramètres de déplacement au dispositif de bord de route, dans lequel les paramètres de déplacement comprennent une direction de déplacement et une voie de déplacement.

9. Procédé selon la revendication 6 ou 7, dans lequel la réception du message de perception de bord de route envoyé par le dispositif de bord de route comprend :
la réception, selon une fréquence de radiodiffusion, du message de perception de bord de route envoyé par le dispositif de bord de route.

10. Procédé selon l'une quelconque des revendications 7 à 9, dans lequel la commande du véhicule pour un déplacement dans la zone efficace selon les informations de perception de route cibles et les informations de perception de véhicule comprend :
la détermination du fait qu'il existe ou non un obstacle dans la zone efficace selon les informations de perception de route cibles et les informations de perception de véhicule ; et
s'il existe un obstacle, la commande du véhicule pour un ralentissement actif à l'avance ; ou la commande du véhicule pour un ralentissement actif à l'avance, et un détour à faible vitesse.

11. Dispositif de bord de route (90), comprenant une pluralité de modules configurés pour mettre en oeuvre le procédé de commande de véhicule selon l'une quelconque des revendications 1 à 5.

12. Véhicule à conduite automatique (100), comprenant une pluralité de modules configurés pour mettre en en oeuvre le procédé de commande de véhicule selon l'une quelconque des revendications 6 à 10.

13. Dispositif électronique, comprenant :
au moins un processeur, et
une mémoire connectée en communication à l'au moins un processeur ; dans lequel
la mémoire stocke des instructions exécutables par l'au moins un processeur, et les instructions sont exécutées par l'au moins un processeur, de sorte que l'au moins un processeur soit capable d'exécuter le procédé de commande de véhicule selon l'une quelconque des revendications 1 à 5 ; ou de sorte que l'au moins un processeur soit capable d'exécuter le procédé de commande de véhicule selon l'une quelconque des revendications 6 à 10.

14. Support de stockage non transitoire lisible par ordinateur, sur lequel sont stockées des instructions d'ordinateur, dans lequel les instructions d'ordinateur sont utilisées pour amener un ordinateur à exécuter le procédé de commande de véhicule selon l'une quelconque des revendications 1 à 5 ; ou, à exécuter le procédé de commande de véhicule selon l'une quelconque des revendications 6 à 10.

15. Produit de programme d'ordinateur, comprenant un programme d'ordinateur, dans lequel le programme d'ordinateur, lorsqu'il est exécuté par un processeur, exécute le procédé de commande de véhicule selon l'une quelconque des revendications 1 à 5 ; ou, exécute le procédé de commande de véhicule selon l'une quelconque des revendications 6 à 10.
